# EUROPÄISCHE PATENTSCHRIFT

(11) **EP 0 623 079 B1**
(45) Veröffentlichungstag und Bekanntmachung des Hinweises auf die Patenterteilung: **22.01.1997**
(21) Anmeldenummer: 93924489.3
(22) Anmeldetag: 16.11.1993
(51) Int. Cl.: B60T 8/26, B60T 8/32, B62L 1/00

(54) **FLUIDISCHE VERBUND-BREMSEINRICHTUNG FÜR EINSPURFAHRZEUGE UND EINSPURFAHRZEUG MIT EINER DERARTIGEN BREMSEINRICHTUNG**
COMBINED HYDRAULICALLY OPERATED BRAKE INSTALLATION FOR TWO-WHEELED VEHICLES, AND A TWO-WHEELED VEHICLE WITH A BRAKE INSTALLATION OF THIS KIND
SYSTEME DE FREINAGE HYDRAULIQUE MIXTE POUR VEHICULES A DEUX ROUES ET VEHICULE A DEUX ROUES EQUIPE D'UN TEL SYSTEME DE FREINAGE

(30) Priorität: 28.11.1992 CH 3655/92
(43) Veröffentlichungstag der Anmeldung: 09.11.1994
(73) Patentinhaber: PERAVES AKTIENGESELLSCHAFT, CH-8406 Winterthur (CH)
(72) Erfinder: WAGNER, Arnold, CH-8406 Winterthur (CH)
(86) Internationale Anmeldenummer: CH9300261
(87) Internationale Veröffentlichungsnummer: WO9412374

(56) Entgegenhaltungen:
- FR-A- 2 441 521
- GB-A- 2 089 917
- GB-A- 2 134 200
- US-A- 4 176 886
- US-A- 4 598 954
- PATENT ABSTRACTS OF JAPAN vol. 10, no. 315 (M-529)(2371) 25. Oktober 1986 & JP,A,61 125 956 (SUMITOMO ELECTRIC IND.) 13. Juni 1986
- PATENT ABSTRACTS OF JAPAN vol. 11, no. 114 (M-579)10. April 1987 & JP,A,61 257 349 (HONDA MOTOR CO.) 14. November 1986
- PATENT ABSTRACTS OF JAPAN vol. 7, no. 244 (M-252)28. Oktober 1983 & JP,A,58 128 953 (JIDOSHA KIKI) 1. August 1983

## Beschreibung

Die Erfindung betrifft eine fluidische Verbund-Bremseinrichtung für Einspurfahrzeuge entsprechend dem Oberbegriff des Patentanspruchs 1 sowie ein mit einer derartigen Bremseinrichtung versehenes Einspurfahrzeug.

Bremseinrichtungen von Einspur-Strassenfahrzeugen müssen über zwei Bremssysteme verfügen, von denen jedes, um die nötige Ausfallsicherheit zu gewährleisten, auch dann wirkt, wenn das andere versagt. In der Regel sind mindestens eine von Hand bedienbare Vorderradbremse und eine davon unabhängige, von Fuss bedienbare Hinterradbremse vorgesehen. Zufolge des Verhältnisses Radstand zu Schwerpunkthöhe bei gebräuchlichen Einspurfahrzeugen verlagert sich bei starker Bremsung bis zu 100% des Gesamtgewichts auf das Vorderrad. Wird durch die Bremsung das Vorderrad blockiert, verliert das Einspurfahrzeug sofort die dynamische Stabilität und es kommt ohne schnelles Lösen der Blockierung zum Sturz. Deshalb darf für Bremsungen in der Nähe des maximalen Reibwertes nicht das Vorderrad vor dem Hinterrad überbremst werden. Optimale Dosierung der Bremskraft mit Hand- und Fussbremse bei gebräuchlichen Einspurfahrzeugen ist wegen der Gesamtgewichtsverlagerung und der damit zu verändernden Bremskraftverteilung für minimalen Bremsweg sehr schwierig, und insbesondere bei veränderlichen Reibwerten der Fahrbahn, z.B. durch Belagsunterschiede, Nässe, Schmutz, Oel, Frost usw. durch den Fahrer kaum erzielbar. Es müssen entweder zu lange Bremswege oder Sturzgefahr in Kauf genommen werden. Bremskraft-Verstärker sind bisher wegen Dosierproblemen nicht anwendbar.

Verbundbremsanlagen sind in verschiedenen Ausführungen bereits bekannt. Es verfügen viele Fahrzeuge, wegen der beim Bremsen auftretenden Fahrzeuggewichtsverlagerung nach vorn, über eine bis zwei Bremsen am Vorderrad und über eine Bremse am Hinterrad. Bei einer seit 1925 bekannten Teilverbund-Bremseinrichtung sind eine Vorderradbremse und die Hinterradbremse mechanisch vom Bremspedal aus betätigbar, und die Ausfallsicherheit wird über Handbetätigung der zweiten Vorderradbremse erreicht. Seit etwa 1970 sind entsprechende hydraulische Teil-Verbundsysteme bekannt, die teilweise durch unterschiedlichen Bremsscheibendurchmesser und / oder Bremszangenübersetzungen noch den jeweiligen Fahrzeugverhältnissen angepasst sind.

Bei einer aus der FRA-A-2441521 bekannten Bremseinrichtung ist das dem Vorderrad zugeordnete Bremssystem mit der zugehörigen Betätigungsvorrichtung über eine Koppelvorrichtung verbunden, welche ihrerseits zusätzlich mit der Betätigungsvorrichtung des dem Hinterrad zugeordneten Bremssystems wirkungsverbunden ist. Die bekannte Koppelvorrichtung enthält eine Zylinderanordnung, welche einen an die Betätigungsvorrichtung des vorderen Bremsystems angeschlossenen, ersten Druckmittelraum, einen an die Betätigungsvorrichtung des hinteren Bremssystems angeschlossenen, zweiten Druckmittelraum und einen diese trennenden Zwischenkolben sowie einen an das vordere Bremssystem angeschlossenen dritten Druckmittelraum und einen zwischen diesem und dem ersten Druckmittelraum angeordneten, zusätzlichen Kolben aufweist. Bei einer Beaufschlagung des ersten Druckmittelraums über die zugehörige Betätigungseinrichtung und/oder einer Beaufschlagung des zweiten Druckmittelraums über die andere Betätigungsvorrichtung wird der zusätzliche Kolben gegen eine Rückholfeder in den dritten Druckmittelraum bewegt, wobei Druckmittel in das vordere Bremssystem verdrängt und dieses aktiviert wird. Ueber die Betätigungsvorrichtung des hinteren Bremssystems werden immer beide Bremssysteme gleichzeitig und gemeinsam betätigt. Die bekannte Bremseinrichtung erfordert für die Betätigung der beiden Bremssysteme zwei Verstellkolben und drei voneinander unabhängige, je mit einem eigenen Nachfüllbehälter verbundene Hydrauliksysteme.

Aufgabe der Erfindung ist es, eine einfach bedienbare, für Einspurfahrzeuge beliebiger Bauart verwendbare Bremseinrichtung der eingangs genannten Art zu schaffen, welche einerseits die Forderung bezüglich Ausfallsicherheit erfüllt, andererseits das Risiko einer Vorderradüberbremsung vermeidet und welche mit geringen Anforderungen an die Geschicklichkeit des Fahrers die Erzielung minimaler Bremswege gewährleistet. Darüber hinaus soll die Bremseinrichtung mit geringem Aufwand herstellbar sein.

Diese Aufgabe wird erfindungsgemäss durch die im kennzeichnenden Teil des Anspruchs 1 angegebenen Merkmale gelöst.

Die erfindungsgemässe Ausführung ergibt eine einfache Bauweise der Koppelvorrichtung, welche eine einfache fluidische Verbindung zwischen dem an sie angeschlossenen Bremssystem und der zugehörigen Betätigungsvorrichtung ermöglicht und welche mit einem einzigen Verbindungsteil eine selbsttätige Kraftverteilung zwischen dem vorderen und hinteren Bremssystem bewirkt, durch Betätigung eines einzigen Bedienungsorgans, z.B. eines Bremspedals, welches über vorteilhaft einfache Verbindungen an die Bremsaggregate - mindestens eine Vorderradbremse und eine Hinterradbremse - anschliessbar ist. Ausfallsicherheit, dh. das unabhängige Funktionieren beim Versagen eines der Bremssysteme wird durch die erfindungsgemäss ausgebildete Koppelvorrichtung gewährleistet, deren Verbindungsteil das vordere vom hinteren Bremssystem fluidisch trennt und gleichzeitig eine mechanische Verbindung herstellt. Das erfindungsgemäss vorgesehene Steuerelement ermöglicht zudem eine selbsttätige Anpassung der Bremskräfte sowie eine durch die Auslegung des Steuerelements vorbestimmbare Verzögerung der Betätigung des an den ersten Druckmittelraum angeschlossenen Bremssystems.

Vorteilhafte Ausgestaltungen der Erfindung sind in den abhängigen Ansprüchen angegeben.

Die nähere Erläuterung der Erfindung erfolgt anhand eines in Zeichnung schematisch dargestellten Ausführungsbeispiels. Es zeigen:
Fig. 1 eine erfindungsgemäss ausgebildete Bremseinrichtung mit Teilen eines Einspurfahrzeuges,
Fig. 2 eine Einzelheit der Bremseinrichtung nach Fig. 1 in einem Längsschnitt, und
Fig. 3 ein mit einer erfindungsgemässen Bremseinrichtung ausgestattetes Einspurfahrzeug in einer Seitenansicht.

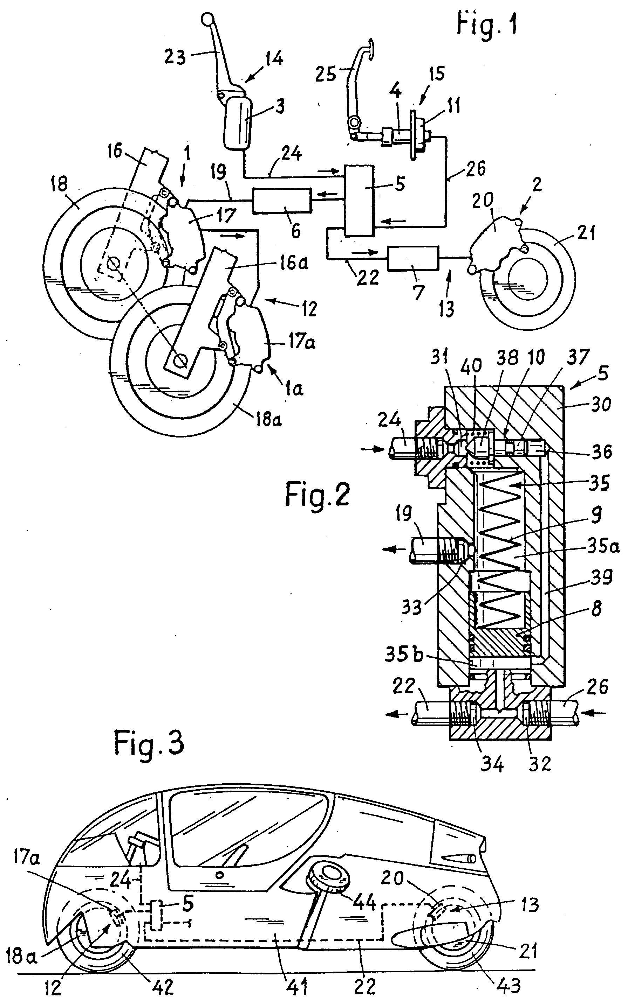

Die Bremseinrichtung nach Fig. 1 , eine fluidische - beim dargestellten Bespiel hydraulische - Bremsanlage, enthält ein einem nicht dargestellten Vorderrad eines Einspurfahrzeuges zugeordnetes, vorderes Bremssystem 12, ein einem nicht dargestellten Hinterrad zugeordnetes Bremssystem 13 und zwei Betätigungsvorrichtungen 14 und 15, welche mit den Bremssystemen 12 und 13 über eine gemeinsame Koppelvorrichtung 5 verbunden sind. Das Bremssystem 12 kann eine oder, wie dargestellt, zwei Vorderradbremsen 1 und 1a enthalten, welche je ein an einem Teil 16 des Fahrzeuges angebrachtes Bremsaggregat 17 bzw. 17a und eine mit dem Vorderrad verbundene Bremsscheibe 18 bzw. 18a aufweisen. Die Bremsaggregate 17, 17a sind über eine Bremsleitung 19 an die Koppelvorrichtung 5 angeschlossen. Das Bremssystem 13 enthält eine Hinterradbremse 2 mit einem am nicht dargestellten Fahrzeug angebrachten Bremsaggregat 20 und einer mit dem Hinterrad verbundenen Bremsscheibe 21. Das Bremsaggregat 20 ist über eine Bremsleitung 22 an die Koppelvorrichtung 5 angeschlossen. Nach einer anderen Ausführungsform können anstelle von Bremsscheiben Bremstrommeln vorgesehen sein.

Die Betätigungsvorrichtung 14 enthält einen über einen Handhebel 23 betätigbaren Handbremszylinder 3, der über eine Druckmittelleitung 24 an die Koppelvorrichtung 5 angeschlossen ist. Die Betätigungsvorrichtung 15 enthält einen über ein Bremspedal 25 betätigbaren Fussbremszylinder 4, der darstellungsgemäss mit einem Bremskraftverstärker 11 versehen sein kann und der über eine Druckmittelleitung 26 an die Koppelvorrichtung 5 angeschlossen ist. Mindestens eine, darstellungsgemäss jede der beiden Bremsleitungen 19 und 22 kann mit einem ABS-Antiblockierregler 6 bzw. 7 versehen sein.

Die Koppelvorrichtung 5 kann gemäss Fig. 2 in Form eines Ventils ausgeführt sein, welches ein Gehäuse 30 mit zwei je an eine der Druckleitungen 24 und 26 anschliessbaren Eingängen 31 bzw. 32 und zwei je an eine der Bremsleitungen 19 und 22 anschliessbaren Ausgängen 33 bzw. 34 sowie mit einer zentralen Bohrung 35 aufweist. Die Bohrung 35 ist durch einen beweglichen Verbindungsteil, darstellungsgemäss einen dichtend geführten Trennkolben 8 in zwei fluidisch voneinander getrennte Druckmittelräume 35a und 35 b unterteilt, welche je die Bremsleitung 19 des vorderen Bremssystems 12 mit der Druckmittelleitung 24 bzw. die Bremsleitung 22 des hinteren Bremssystems 13 mit der Druckmittelleitung 26 verbinden. Statt eines Trennkolbens kann auch ein anderer Verbindungsteil, z.B. in Form einer Membrane, vorgesehen sein. Nach einer weiteren, nicht dargestellten Ausführungsform kann eine Verbindung der Druckmittelleitung 24 zur Bremsleitung 22 bzw. der Druckmittel-Leitung 26 zur Bremsleitung 19, für handbetätigte Verbundbremsen, etwa bei Invalidenfahrzeugen, vorgesehen sein. Zu diesem Zweck kann, entgegen der Darstellung in Fig. 2, die Druckmittelleitung 24 am Eingang 32 und die Druckmittelleitung 26 am Eingang 31 angeschlossen werden.

Gemäss Fig. 2 ist der Trennkolben 8 durch ein Steuerelement, darstellungsgemäss eine vorgespannte Druckfeder 9, gegen den Druckmittelraum 35 b in einer dem Eingang 32 und dem Ausgang 34 nahen Grundstellung gehalten, welche eine selektive Betätigung jedes der beiden Bremssysteme 12 und 13 durch die zugehörigen Betätigungsvorrichtungen 14 bzw 15 gestattet. Wenn die auf den Trennkolben 8 ausgeübte , der Druckfeder 9 entgegenwirkende Druckkraft die Vorspannkraft der Druckfeder 9 übersteigt, wird der Trennkolben 8 aus der dargestellten Grundstellung tiefer in den Druckmittelraum 35 a verschoben, aus dem Druckmittel in die Bremsleitung 19 verdrängt und somit das vordere Bremssystem 12, gemeinsam mit dem hinteren Bremssystem 13, über das Bremspedal 25 betätigbar ist. Anstelle einer Druckfeder kann auch ein anderes Steuerelement, z.B. eine direkt oder über eine fluidische oder mechanische Verbindung die Stellung des Trennkolbens 8 beeinflussende Membrane, vorgesehen sein.

Der Eingang 31 ist durch ein im Gehäuse 30 angeordnetes Nadelventil 10 verschliessbar, welches einen in einer Bohrung 36 des Gehäuses 30 dichtend geführten Führungskolben 37 mit einem Ventilkörper 38 enthält, der gegen die Wirkung einer Rückstellfeder 40 gegen einen Ventilsitz verspannbar und zwischen einer den Eingang 31 schliessenden Schliessstellung und einer diesen freigebenden Offenstellung verstellbar ist. Die Bohrung 36 ist über einen Kanal 39 dem Druckmittelraum 35 b angeschlossen, über den der Führungskolben 37 im Sinne einer Schliessbewegung des Nadelventils 10 beaufschlagbar ist.

Der normale Bremsvorgang läuft mit der erfindungsgemässen Bremseinrichtung wie folgt ab: Durch Pedaldruck baut der Fussbremszylinder 4 Druck in der Leitung 26 zum Koppelventil 5 auf und betätigt die Hinterradbremse 2. Im Koppelventil 5 baut sich über die Verbindung zum Trennkolben 8 und zum Nadelventil 10 gleichfalls Druck auf. Das Nadelventil 10 schliesst die Leitung 24 zum Handbremszylinder 3. Sobald der aufgebaute Druck auf den Trennkolben 8 die Vorspannung der Druckverteilfeder 9 übersteigt, beginnt sich der Trennkolben 8 aus seiner Endlage gegen die Druckverteilfeder 9 zu bewegen und drückt diese zusammen. Gleichzeitig wird das dadurch verdrängte Fluidum wegen des geschlossenen Nadelventils 10 zu den Vorderradbremsen 1 und 1 a gedrückt und bewirkt vorne die Bremsbetätigung.

Mittels der Auslegung des Steuerelementes sowie der Grösse von Hub und Bohrung des Trennkolbens 8 lassen sich bei der erfindungsgemässen Bremseinrichtung eine Verzögerung der Vorderradbremsung sowie die Bremskraftverhältnisse vorne/hinten in Funktion des Fussbremsdrucks derart steuern, dass die Radlastveränderung durch die Fahrzeuggewichtsverlagerung mit einer angepassten Bremskraft ausgeglichen wird. Besonders zweckmässig ist es, die Bremskraft des Hinterrades für die variable Radlast etwas höher und für das Vorderrad etwas tiefer als optimal zu steuern. Es kommt dann zuerst zu einer Hinterradblockierung, die den Fahrer vor der nahen Vorderradüberbremsung mit Sturzgefahr warnt.

Ein besonderer Vorteil der erfindungsgemässen Koppelung der beiden Bremssysteme 12 und 13 liegt darin, dass der Fahrer zur maximalen Bremsung nur ein Pedal 25 betätigen muss, die gleichzeitige Betätigung der Handbremse ist dazu nicht notwendig. Zudem besteht, wie bei Vierradfahrzeugen, ein direkter Zusammenhang zwischen Pedalkraft und Verzögerung, welcher gegebenenfalls die Verwendung eines Bremskraft-Verstärkers 11 am Fussbremszylinder 4 ohne Gefahr einer falschen Blockierreihenfolge erlaubt. Die erfindungsgemässe Bremsanlage gestattet zudem eine Ergänzung durch nur zwei ABS-Antiblockier-Druckregler 6, 7, während bisherige Einspur-Verbundsysteme drei oder mehr derartige Aggregate für einen vollen Blockierschutz benötigen.

Besonders vorteilhaft ist die erfindungsgemässe Bremseinrichtung im Störungsfall. Sollte beim Fussbremszylinder 4 bzw. an den Leitungen 22, 26, zur Hinterradbremse 2 bzw. an dieser selbst eine Störung auftreten, können mit der Handbremse völlig unabhängig die Vorderradbremsen 1 und 1 a benützt werden, da der Trennkolben 8 in Ruhelage die Bremssysteme 12 und 13 trennt und das offene Nadelventil 10 den ungehinderten Druckaufbau im vorderen Bremssystem 12 gestattet und der ABS-Antiblockier-Druckregler 6 unbeeinflusst funktioniert.

Tritt beim Handbremszylinder 3 bzw. an den Leitungen 19, 24, zu den Vorderradbremsen 1 und 1 a bzw. an diesen selbst eine Störung auf, erfolgt durch Pedaldruck ein Anfangs-Druckaufbau im hinteren Bremssystem 13, entsprechend der Kraft der Druckverteilfeder 9 . Der Trennkolben 8 bewegt sich gegen die Feder 9. Besonders vorteilhaft ist eine Anpassung des Volumens des Fussbremszylinders 4 an das maximale Verdrängungsvolumen des Trennkolbens 8, dergestalt, dass bei etwa 3/4 des maximalen Pedalhubs der Trennkolben 8 an der anderen Endlage aufläuft. Sobald dies der Fall ist, steigt im hinteren Bremssystem 13 der Druck bei weiterem Durchtreten des Pedals 25 bis zur maximalen Bremskraft an, dh. das hintere Bremssystem 13 funktioniert, bei etwas grösserem Pedalhub, unbeeinflusst von der Störung im vorderen Bremssystem 12. Beide Störungsfälle sind vom Fahrer sofort erkennbar, nämlich durch ein durchfallendes Pedal 25 bei Ausfall des hinteren Bremssystems 13, bzw. durch einen grossen Pedalhub und reduzierte Bremswirkung bei Ausfall des vorderen Bremssystems 12 mit gleichzeitigem Durchfallen des Handhebels 25.

Das Einspurfahrzeug nach Fig. 3, darstellungsgemäss ein Kabinen-Motorrad mit einer Karosserie 41, einem Vorderrad 42, einem Hinterrad 43 und ausschwenkbaren Stützrollen 44, enthält eine erfindungsgemässe Bremseinrichtung, von der einige vorstehend beschriebene Teile in der Zeichnung angedeutet sind.

Die erfindungsgemässe Bremseinrichtung ist auch für andere Einspurfahrzeuge beliebiger Bauart, z.B. konventionelle Motorräder oder durch Muskel kraft betriebene Fahrzeuge, verwendbar. Die erfindungsgemässe Ausführung ist ferner auch für pneumatische Bremseinrichtungen geeignet.

## Patentansprüche

1. Fluidische Verbund-Bremseinrichtung für Einspurfahrzeuge, mit zwei, je einem Rad - Vorderrad und Hinterrad - zugeordneten, je mindestens ein Bremsaggregat (17, 17a, 20) enthaltenden Bremssystemen (12, 13) und zwei voneinander unabhängigen Betätigungsvorrichtungen (14, 15) für je eines der Bremssysteme (12, 13), von denen ein erstes (12) mit der zugehörigen Betätigungsvorrichtung (14) über eine Koppelvorrichtung (5) verbunden ist, welche zwei je an eine der Betätigungsvorrichtungen (14 bzw. 15) angeschlossene, voneinander getrennte Druckmittelräume (35a, 35b) und einen über diese je mit einem Druckmittel beaufschlagbaren, beweglichen Verbindungsteil (8) enthält, über den das erste Bremssystem (12) zusätzlich mit der Betätigungsvorrichtung (15) des anderen, zweiten Bremssystems (13) koppelbar ist, dadurch gekennzeichnet, dass das erste Bremssystem (12) mit dem an die zugehörige Betätigungsvorrichtung (14) angeschlossenen, ersten Druckmittelraum (35a) der Koppelvorrichtung (5) fluidisch verbunden und durch das aus diesem verdrängbare Druckmittel betätigbar ist, und dass die Koppelvorrichtung (5) ein gegen den Verbindungsteil (8) verspannbares Steuerelement (9) enthält, welches einer aus einer Beaufschlagung des Verbindungsteils (8) über den zweiten Druckmittelraum (35b) resultierenden Betätigungskraft mit einer Vorspannkraft entgegenwirkt, die einer vorbestimmten Bremskraft des zweiten Bremssystems (13) entspricht, wobei erst bei einer diese Vorspannkraft übersteigenden Betätigungskraft der Verbindungsteil (8) gegen den ersten Druckmittelraum (35a) bewegbar und das erste Bremssystem (12) über die Betätigungsvorrichtung (15) des zweiten Bremssystems (13) betätigbar ist.

2. Bremseinrichtung nach Anspruch 1, deren Koppelvorrichtung (5) einen Trennkolben (8) als Verbindungsteil enthält, dadurch gekennzeichnet, dass als Koppelvorrichtung (5) ein Ventil vorgesehen ist, welches zwei je einer der Betätigungsvorrichtungen (14, 15) zugeordete Eingänge (31, 32), zwei je einem der Bremssysteme (12, 13) zugeordnete Ausgänge (33, 34) und eine diese Ein- und Ausgänge verbindende, die Druckmittelräume (35a, 35b) bildende Bohrung (35) aufweist, die das Steuerelement (9) und den in der Bohrung dichtend geführten Trennkolben (8) enthält, welcher die Druckmittelräume (35a, 35b) voneinander trennt und welcher zwischen einer dem Ausgang (34) zum zweiten, z.B. hinteren Bremssystem (13) zugeordneten Grundstellung, die eine selektive Betätigung jedes der Bremssysteme (12 und 13) durch die zugehörige Betätigungsvorrichtung (14 bzw. 15) zulässt, und einer gegen den Ausgang (33) zum ersten, z.B. vorderen Bremssystem (12) versetzten Hubstellung verstellbar ist, wobei bei einer Betätigung des zweiten Bremssystems (13) durch die zugeordnete Betätigungsvorrichtung (15) mit einer die Vorspannkraft des Steuerelements (9) übersteigenden Betätigungskraft über eine entsprechende Hubbewegung des Trennkolbens (8) auch das erste Bremssystem (12) betätigbar ist.

3. Bremseinrichtung nach Anspruch 1 oder 2, dadurch gekennzeichnet, dass die Vorspannkraft des Steuerelements (9) einer Bremskraft des zweiten, insbesondere hinteren Bremssystems (13) entspricht, welche einen für eine maximale Verzögerung des Einspurfahrzeugs erforderlichen, vorbestimmten Wert dieser Bremskraft übersteigt.

4. Bremseinrichtung nach einem der vorangehenden Ansprüche, dadurch gekennzeichnet, dass das erste, insbesondere vordere Bremssystem (12) so ausgelegt ist, dass durch das vom Verbindungsteil (8) verdrängte Druckmittel eine Bremskraft erzeugbar ist, welche kleiner ist als ein für eine maximale Verzögerung des Einspurfahrzeugs erforderlicher Wert dieser Bremskraft.

5. Bremseinrichtung nach einem der vorangehenden Ansprüche, dadurch gekennzeichnet, dass die Koppelvorrichtung (5) einen dem Druckmittelraum (35a) des ersten, insbesondere vorderen Bremssystems (12) zugeordneten Ventilkörper (38) enthält, welcher mit einer vorbestimmten Schliesskraft gegen einen an die zugehörige Betätigungsvorrichtung (14) angeschlossenen Ventilsitz verspannbar und zwischen einer die Verbindung zwischen dieser Betätigungsvorrichtung (14) und dem Druckmittelraum (35a) sperrenden Schliessstellung und einer sie freigebenden Offenstellung verstellbar ist.

6. Bremseinrichtung nach Anspruch 5, dadurch gekennzeichnet, dass der Ventilkörper (38) über eine Kolbenpartie (37) verstellbar ist, welche in einer Bohrung (36) der Koppelvorrichtung (5) geführt ist, die mit dem an das zweite Bremssystem (13) angeschlossenen, zweiten Druckmittelraum (35b) verbunden und über diesen mit Druckmittel beaufschlagbar ist.

7. Bremseinrichtung nach einem der vorhergehenden Ansprüche, dadurch gekennzeichnet, dass mindestens eine der Betätigungsvorrichtungen (15) ein Aggregat (11) zur Verstärkung der Betätigungskraft enthält.

8. Bremseinrichtung nach einem der vorangehenden Ansprüche, dadurch gekennzeichnet, dass mindestens eines der Bremssysteme (12 und 13) einen in der Verbindung zwischen der Koppelvorrichtung (5) und mindestens einem Bremsaggregat (17, 17a bzw. 20) des betreffenden Bremssystems (12 bzw. 13) angeordneten ABS-Antiblockierdruckregler (6, 7) enthält.

9. Einspurfahrzeug mit einer Bremseinrichtung nach einem der Ansprüche 1 bis 8.

## Claims

1. A fluid interlinked brake device for two-wheeled vehicles including two brake systems (12,13) associated with respective wheels - the front wheel and the rear wheel - and each comprising at least one brake unit (17,17a,20); and two independent actuators (14,15) for a respective one of the brake systems (12,13), a first (12) of which is connected to the associated actuator (14) by means of a coupler (5), which includes two pressure medium chambers (35a,35b), characterised in that the first brake system (12) is fluidically connected to the first pressure medium space (35a), which is connected to the associated actuator (14), of the coupler (5) and is actuable by the pressure medium displaced from the first pressure medium chamber and that the coupler (5) includes a control element, which may be urged against the connecting member (8) and which acts with a biasing force against an actuating force resulting from action on the connecting member (8) via the second pressure medium chamber (35b), which biasing force corresponds to a predetermined braking force of the second brake system (13), whereby the connecting member (8) is only movable towards the first pressure medium chamber (35a) when the actuating force exceeds this biasing force and the first brake system (12) is actuable by means of the actuator (15) of the second brake system (13).

2. Brake device as claimed in claim 1, the coupler (5) of which includes an isolating piston (8) as the connecting member, characterised in that a valve is provided as the coupler (5) which has two inlets (31,32), associated with a respective one of the actuators (14,15), two outlets (33,34), associated with a respective one of the brake systems (12,13), and a bore (35), which constitutes the pressure medium chambers (35a,35b) and connects these inlets and outlets and which includes the control element (9) and the isolating piston (8), which is sealingly guided in the bore and which isolates the pressure medium chambers (35a,35b) from one another and which is adjustable between a normal position, which is associated with the outlet (34) to the second, e.g. rear, brake system (13) and which permits selective actuation of each of the brake systems (12 and 13) by the associated actuator (14 and 15, respectively), and an operative position offset towards the outlet (33) to the first, e.g. front, brake system (12), whereby when the second brake system (13) is actuated by the associated actuator (15) the first brake system (12) is also actuable by means of a corresponding operative movement of the isolating piston (8) with an actuating force which exceeds the biasing force of the control element (9).

3. Brake device as claimed in claim 1 or 2, characterised in that the biasing force of the control element (9) corresponds to a braking force of the second, particularly rear, brake system (13) which exceeds a predetermined value of this braking force necessary for maximum deceleration of the two-wheeled vehicle.

4. Brake device as claimed in one of the preceding claims, characterised in that the first, particularly front, brake system (12) is so constructed that a braking force may be produced by the pressure medium displaced by the connecting member (8) which is smaller than a value of this braking force necessary for maximum deceleration of the two-wheeled vehicle.

5. Brake device as claimed in one of the preceding claims, characterised in that the coupler (5) includes a valve body (38), which is associated with the pressure medium chamber (35a) of the first, particularly front, brake system (12) and which may be urged with a predetermined closing force against a valve seat connected to the associated actuator (14) and may be moved between a closed position shutting off the connection between this actuator (14) and the pressure medium chamber (35a) and an open position opening the same.

6. Brake device as claimed in claim 5, characterised in that the valve body (38) is movable by way of a piston part (37), which is guided in a bore (36) in the coupler (5), which may be connected to the second pressure medium chamber (35b), connected to the second brake system (13), and may be acted upon by pressure medium by way of the latter.

7. Brake device as claimed in one of the preceding claims, characterised in that at least one of the actuators (15) includes a unit (11) for amplifying the actuating force.

8. Brake device as claimed in one of the preceding claims, characterised in that at least one of the brake systems (12 and 13) includes an ABS anti-locking pressure controller (6,7) arranged in the connection between the coupler (5) and at least one brake unit (17,17a and 20, respectively) of the brake system (12,13 respectively) concerned.

9. A two-wheeled vehicle having a brake device as claimed in one of claims 1 to 8.

## Revendications

1. Installation de freinage combinée, fonctionnant avec un fluide, pour véhicules à une seule voie, avec deux systèmes de freinage (12, 13) associés chacun à une roue - la roue avant et la roue arrière - qui contiennent chacun au moins un ensemble de freinage (17, 17a, 20) et deux dispositifs d'actionnement (14, 15) indépendants l'un de l'autre pour chacun d'un des systèmes de freinage (12, 13), dont le premier (12) est relié au dispositif d'actionnement correspondant (14) au moyen d'un dispositif d'accouplement (5), qui contient deux chambres de fluide sous pression (35a, 35b), séparées l'une de l'autre, raccordées chacune à l'un des dispositifs d'actionnement (14 et 15) et une pièce de liaison (8) mobile, qui peut être actionnée au moyen de celles-ci chacune par un fluide sous pression, pièce de liaison (8) au moyen de laquelle le premier système de freinage (12) peut être accouplé en plus avec le dispositif d'actionnement (15) de l'autre système de freinage (13), à savoir le second système de freinage, installation de freinage caractérisée en ce que le premier système de freinage (12) est relié par un fluide à la première chambre de fluide sous pression (35a) du dispositif d'accouplement, chambre qui est raccordée au dispositif d'actionnement correspondant (14), ce premier système de freinage (12) pouvant être actionné par le fluide sous pression refoulé à partir de cette première chambre, et en ce que le dispositif d'accouplement (5) contient un élément de commande (9) que l'on peut précontraindre contre la pièce de liaison (8), élément de commande (9) qui réagit par une force de précontrainte à une force d'actionnement résultant d'une sollicitation de la pièce de liaison (8) au moyen de la seconde chambre de fluide sous pression (35b), la force de précontrainte correspondant à une force de freinage prédéterminée du second système de freinage (13), alors que la pièce de liaison (8) peut être déplacée contre la première chambre de fluide sous pression (35a) dans le cas d'une force d'actionnement dépassant cette force de précontrainte et le premier système de freinage (12) pouvant être actionné au moyen du dispositif d'actionnement (15) du second système de freinage (13).

2. Installation de freinage selon la revendication 1, dont le dispositif d'accouplement (5) contient un piston de séparation (8) comme pièce de liaison, installation de freinage caractérisée en ce que l'on prévoit comme dispositif d'accouplement (5) une soupape, qui contient deux entrées (31, 32), associées chacune à l'un des dispositifs d'actionnement (14, 15), deux sorties (33, 34), associées chacune à l'un des systèmes de freinage (12, 13), et un alésage (35) constituant les chambres de fluide sous pression (35a, 35b) reliant ces entrées et ces sorties, alésage qui contient l'élément de commande (9) et le piston de séparation (8) guidé de façon étanche dans l'alésage, piston de séparation (8) qui sépare l'une de l'autre les chambres de fluide sous-pression (35a, 35b) et qui peut être réglé entre une position de base correspondant à la sortie (34) allant vers le second système de freinage (13), par exemple le système arrière, qui permet d'effectuer un actionnement sélectif de chacun des systèmes de freinage (12 et 13) par le dispositif correspondant d'actionnement (14 ou 15), et une position décalée contre la sortie (33) allant vers le premier système de freinage (12), par exemple le système avant, alors que le premier système de freinage (12) peut être aussi actionné lors d'un actionnement du second système de freinage (13) par le dispositif d'actionnement correspondant (15) avec une force d'actionnement surpassant la force de précontrainte de l'élément de commande (9) grâce à une course correspondante du piston de séparation (8).

3. Installation de freinage selon la revendication 1 ou 2, caractérisée en ce que la force de précontrainte de l'élément de commande (9) correspond à une force de freinage du second système de freinage (13), en particulier le système arrière, qui dépasse une valeur prédéterminée de cette force de freinage, nécessaire pour obtenir une décélération maximale du véhicule à une seule voie.

4. Installation de freinage selon l'une des revendications précédentes, caractérisée en ce que le premier système de freinage (12), en particulier le système de freinage avant, est conçu d'une manière telle que l'on peut obtenir une force de freinage par le fluide sous pression, refoulé par la pièce de liaison (8), qui est plus petite qu'une valeur de cette force de freinage nécessaire pour obtenir une décélération maximale du véhicule à une seule voie.

5. Installation de freinage selon l'une des revendications précédentes, caractérisée en ce que le dispositif d'accouplement (5) contient un corps de soupape (38) associé à la chambre de fluide sous pression (35a) du premier système de freinage (12), en particulier le système de freinage avant, corps de soupape qui peut être serré par une force de fermeture prédéterminée contre un siège de soupape raccordé au dispositif d'actionnement correspondant (14) et peut être réglé entre une position de fermeture obturant la liaison entre ce dispositif d'actionnement (14) et la chambre de fluide sous pression (35a), et une position d'ouverture la libérant.

6. Installation de freinage selon la revendication 5, caractérisée en ce que le corps de soupape (38) peut être déplacé sur une partie du piston (37), qui est guidée dans un alésage (36) du dispositif d'accouplement (5), qui est relié à la seconde chambre de fluide sous pression (35b), raccordée au second système de freinage (13) et peut être alimenté par celle-ci en fluide sous pression.

7. Installation de freinage selon l'une des revendications précédentes, caractérisée en ce qu'au moins l'un des dispositifs d'actionnement (15) contient un ensemble (11) servant à amplifier la force d'actionnement.

8. Installation de freinage selon l'une des revendications précédentes, caractérisée en ce qu'au moins l'un des systèmes de freinage (12 et 13) contient un régulateur de système d'antiblocage ABS (6, 7), disposé dans la liaison entre le dispositif d'accouplement (5) et au moins un ensemble de freinage (17, 17a ou 20) du système de freinage correspondant (12 ou 13).

9. Véhicule à une seule voie avec une installation de freinage selon l'une des revendications 1 à 8.
